Europäisches Patentamt

European Patent Office

Office européen des brevets

(11) Veröffentlichungsnummer: **0 048 844**
**B1**

(12) **EUROPÄISCHE PATENTSCHRIFT**

(45) Veröffentlichungstag der Patentschrift: 24.04.85

(51) Int. Cl.⁴: **C 08 F 210/02, C 08 F 236/04, C 08 F 4/68**

(21) Anmeldenummer: 81107009.3

(22) Anmeldetag: 07.09.81

(54) Terpolymere aus Ethylen, Butadien und Isopren und Verfahren zu ihrer Herstellung.

(30) Priorität: 19.09.80 DE 3035358

(43) Veröffentlichungstag der Anmeldung:
07.04.82 Patentblatt 82/14

(45) Bekanntmachung des Hinweises auf die
Patenterteilung:
24.04.85 Patentblatt 85/17

(84) Benannte Vertragsstaaten:
BE DE FR GB IT NL

(56) Entgegenhaltungen:
DE-A-2 113 164
DE-A-2 128 804

DERWENT JAPANESE PATENTS REPORT,
Band T, Nr. 20, 20. Juni 1972, Derwent
Publications Ltd. London WC1X 8RP, G.B.
"Polymers", Seite 6, Nr. 32,319T
CHEMICAL ABSTRACTS, Band 79, 1973, Nr. 12,
24. September 1973, Seiten 62, 63, Nr. 67616e
Columbus, Ohio, U.S.A.

(73) Patentinhaber: BAYER AG
Konzernverwaltung RP Patentabteilung
D-5090 Leverkusen 1 Bayerwerk (DE)

(72) Erfinder: Wieder, Wolfgang, Dr. c/o Bayer France
SA
Division Production Polymers Boite Postale 41
F-76170 Lillbonne (FR)
Erfinder: Witte, Josef, Dr.
Haferkamp 10
D-5000 Köln 80 (DE)

Courier Press, Leamington Spa, England.

EP 0 048 844 B1

**Beschreibung**

Die Erfindung betrifft Terpolymere aus Ethylen, Butadien und Isopren sowie ein Verfahren zu ihrer Herstellung. Insbesondere betrifft die Erfindung Terpolymere aus Ethylen, Butadien und Isopren, die aus alternierenden Diolefin-Ethylen-Einheiten aufgebaut sind, so daß das erfindungsgemäße Polymere etwa 50 Mol-% Ethylen enthält.

Alternierende Ethylen-Butadien-Copolymere wurden von G. Natta et al. beschrieben: Makromol. Chem. *79*, 161 (1964). Wenn die Butadieneinheit in trans-1,4-Konfiguration vorliegt, dann sind die Produkte kristallin mit einem Schmelzpunkt von 60—65°C.

Aus den Deutschen Offenlegungsschriften 2 113 164 und 2 128 804 sind Ethylen-Isopren- und Ethylen-Butadien-Copolymere bekannt. Die darin beschriebenen Produkte werden mittels Titan-Katalysatoren hergestellt. Sowohl die Herstellverfahren, als auch die Produkte weisen jedoch eine Reihe von Nachteilen auf. So sind die alternierenden Diolefin-Ethylen-Copolymeren nicht stereospezifisch aufgebaut, d.h. die Diolefin-Einheit liegt zu mehr als 10% in 1,2- oder 3,4-Konfiguration vor. Ein weiterer Nachteil des beschriebenen Verfahrens ist, daß neben alternierenden Ethylen-Diolefin-Copolymeren auch statistische Copolymere entstehen, die von ersteren durch Lösen abgetrennt werden müssen.

Terpolymere aus Ethylen, Butadien und Isopren, die alternierende Ethylen-Diolefin-Sequenzen enthalten, sind bisher nicht bekannt geworden. Die erfindungsgemäßen Terpolymeren sind gekennzeichnet durch einen Gehalt an Ethyleneinheiten zwischen 45 und 55 Mol-%, wobei Ethylengehalte von 50±2 Mol-% bevorzugt sind. Weiterhin enthalten die erfindungsgemäßen Copolymeren etwa 2—48 Mol-% Butadien und 48—2 Mol-% Isopren. Die einpolymerisierten Diolefin-Einheiten sind zu mehr als 95% 1,4-konfiguriert; weniger als 5 Mol-% der Diolefin-Einheiten liegen in 1,2- oder 3,4-Konfiguration vor. Der molekulare Aufbau der erfindungsgemäßen Terpolymeren kann im wesentlichen beschrieben werden durch die Formel

$$+1,4\text{-Butadien-Ethylen}+_m+1,4\text{-Isopren-Ethylen}+_n$$

Solche alternierenden Diolefin-Ethylen-Einheiten sind zu mehr als 80 Mol%, vorzugsweise mehr als 90 Mol% enthalten. Die erfindungsgemäßen Terpolymeren zeichnen sich also durch eine sehr regelmäßige Anordnung der Monomereinheiten aus.

Ein Vorzug der erfindungsgemäßen Terpolymeren besteht darin, daß sich der Gehalt in Butadien bzw. Isopren im Polymer durch Wahl der Herstellbedingungen variieren läßt. Dadurch lassen sich Eigenschaften wie Kristallinität und Elastizität gezielt einstellen, so daß die erfindungsgemäßen Terpolymeren wahlweise elastomere, thermoelastische bzw. thermoplastische Eigenschaften besitzen. Es wurde nämlich gefunden, daß mit steigendem Anteil an 1,4-Isopren-Einheiten der mittels DSC-Messungen (DSC=differential scan calorimetry) gefundene Schmelzpunkt der Produkte abnimmt, was für eine Verwendung der Produkte als Elastomere vorteilhaft ist. Andererseits kann durch Verminderung des 1,4-Isoprengehalts die Kristallinität der Produkte erhöht werden, was z.B. daraus hergestellten Formkörpern oder Filmen Festigkeit verleiht.

Gegenstand der Erfindung sind Ethylen-Butadien-Isopren-Terpolymere, die zu mehr als 80 Mol-% aus alternierenden Ethylen-Dien-Einheiten aufgebaut sind und mehr als 95 Mol-% der eingebauten Dien-Einheiten in der 1,4-Konfiguration enthalten.

Es wurde gefunden, daß sich solche neuen Terpolymeren in Gegenwart bestimmter Vanadiumkatalysatoren herstellen lassen, wobei das Herstellverfahren einen weiteren Gegenstand der Erfindung darstellt.

Das erfindungsgemäße Verfahren zur Herstellung der Terpolymeren ist dadurch gekennzeichnet, daß die Polymerisation in Gegenwart eines Katalysators durchgeführt wird, der aus

a) einer Vanadiumverbindung der Formel $VO(OR)_2X$ und

b) einer aluminiumorganischen Verbindung der Formeln $HAlR_2'$, $AlR_3'$, $R_2'AlY$ besteht.

Das molare Verhältnis b/a beträgt 100:1 bis 1:10, vorzugsweise 10:1 bis 1:1.

Der Substituent R in obiger Formel bedeutet eine geradkettige, verzweigte oder cyclische Alkylgruppe mit 1—20 C-Atomen, bevorzugt mit 1—10, besonders bevorzugt mit 4—10 C-Atomen.

Die Alkylgruppen sind bevorzugt verzweigt. Der Substituent X stellt eine Halogengruppe (z.B. Chlor. Brom) dar. Die Reste R können gleich oder voneinander verschieden sein.

Der Substituent R' bedeutet eine geradkettige, verzweigte oder cyclische Alkylgruppe mit 1—8 C-Atomen. Y stellt eine Halogengruppe (z.B. Chlor. Brom, Iod) dar.

Als Vanadiumverbindungen a) seien beispielhaft genannt:

Dimethoxivanadiumoxichlorid
Diethoxivanadiumoxichlorid
Dipropoxivanadiumoxichlorid
Di-isopropoxivanadiumoxichlorid
Dibutoxivanadiumoxichlorid
Di-isobutoxivanadiumoxichlorid
Di-sek . butoxivanadiumoxichlorid
Di-tert.-butoxivanadiumoxichlorid
Dipentyloxivanadiumoxichlorid
Di-isoamyloxivanadiumoxichlorid
Di-neopentyloxivanadiumoxichlorid
Dihexyloxivanadiumoxichlorid
Di-(2-ethylhexyloxi)vanadiumoxichlorid
Di-(2-methylbutyloxi)vanadiumoxichlorid
Di-(2-ethylbutoxi)vanadiumoxichlorid.

Bevorzugt sind Verbindungen mit verzweigtem Rest R wie

Diisobutoxivanadiumoxichlorid
Dineopentyloxivanadiumoxichlorid

Di-(2-ethylhexyloxi)vanadiumoxichlorid
Di(2-methylbutyloxi)vanadiumoxichlorid
Di-(2-ethylbutyloxi)vanadiumoxichlorid.

Als Aluminiumverbindungen b) seien beispielhaft genannt:

Trimethylaluminium
Triethylaluminium
Tripropylaluminium
Tributylaluminium
Triisobutylaluminium
Tri-cyclohexylaluminium
Trioctylaluminium
Diisobutylaluminiumhydrid
Diisobutylaluminiumchlorid
Diethylaluminiumchlorid
Diethylaluminiumbromid
Diethylaluminiumjodid.

Besonders bevorzugt wird Triisobutylaluminium.

Die Katalysatorkomponente a) wird bevorzugt in Mengen von 0,01—15 mMol, bezogen auf 100 g Ethylen, besonders bevorzugt in Mengen von 0,1 bis 10 mMol eingesetzt.

Das erfindungsgemäße Verfahren ist weiterhin dadurch gekennzeichnet, daß die Polymerisation in Lösung stattfindet, wobei die Fälle eingeschlossen sein sollen, bei denen das gebildete Produkt im Laufe der Reaktion ausfällt. Als Lösungsmittel sind Aromaten, Cycloaliphaten und Aliphaten geeignet, z.B. Benzol, Toluol, Pentan, Hexan, Heptan, Cyclohexan sowie Chlorkohlenwasserstoffe wie Dichlormethan oder Chlorbenzol. Die Polymerisation kann aber auch in überschüssigem Monomeren durchgeführt werden. Die Reaktion wird bei Temperaturen zwischen −80°C und +100°C gegebenenfalls unter Druck durchgeführt, wobei Temperaturen zwischen −60°C und +60°C bevorzugt werden. Eine bevorzugte Ausführungsform der Erfindung besteht darin, Isopren und Butadien mit dem Katalysator, gegebenenfalls in einem Lösungsmittel vorzulegen und Ethylen bis zum gewünschten Endumsatz einzuleiten. Eine andere bevorzugte Ausführungsform besteht darin, Isopren und den Katalysator, gegebenenfalls in einem Lösungsmittel vorzulegen und Ethylen und Butadien gleichzeitig und gleichmäßig zuzudosieren. Es können aber auch, im Sinne einer üblichen Lösungspolymerisation, die Monomeren in Lösungsmittel vorgelegt und der Katalysator anschließend zugegeben werden.

Die Diolefine werden im Überschuß eingesetzt, d.h. das molare Verhältnis Diolefine/Ethylen ist größer als 1:1, vorzugsweise zwischen 1,1—100:1.

Nach Beendigung der Polymerisation wird der Katalysator in üblicher Weise durch Zugabe von Aminen, Alkoholen oder Carbonsäuren wie Triethylamin, Ethanol oder Ameisensäure desaktiviert. Nach Zugabe eines Stabilisators, z.B. 2,6-Di-tert.butyl-methylphenol, kann das erfindungsgemäße Produkt durch Ausfällen oder Strippen isoliert werden. Der gesamte Prozeß, Polymerisation und Aufarbeitung, kann diskontinuierlich oder kontinuierlich durchgeführt werden.

Die erfindungsgemäßen Terpolymeren eignen sich für den Einsatz als Synthesekautschuk, thermoplastische Elastomere oder Thermoplasten. Sie lassen sich in herkömmlicher Weise verarbeiten und vulkanisieren. Die Produkte können, je nach ihren Eigenschaften, zur Herstellung von Formartikeln, Filmen, Autoreifen und technischen Gummiartikeln verwendet werden.

Beispiel 1

In einem trockenen Kolben werden unter Stickstoffatmosphäre 500 ml trockenes n-Hexan, 136 g Isopren und 55 g Butadien bei −30°C vorgelegt. Nach Zugabe von 10 mMol Triisobutylaluminium und 1 mMol Dineopentyloxivanadiumoxichlorid wurden innerhalb 30 Minuten etwa 10 g Ethylen eingeleitet.

Nach Beendigung der Ethylen-Zugabe wurde die erhaltene Suspension nach 10 Minuten weitergerührt. Nach Zugabe von 2,6-Di-tert.butyl-methylphenol als Stabilisator wurde das Produkt in Alkohol ausgefällt und bei 50°C im Vakuum getrocknet. Man erhielt 30 g eines kautschukartigen Polymeren. Die Grenzviskosität [η], gemessen in Toluol bei 25°C, betrug 2,40 dl/g. N-NMR-Messungen ergaben folgende Zusammensetzung (Angaben in Mol%):

Ethylen 50,8, 1,4-Butadien 38,0, 1,4-Isopren 10,3, 1,2-Butadien 0,8, 3,4-Isopren <0,1. Bei einer DSC-Analyse wurden folgende Werte erhalten (Aufheizrate 32 K/min): Schmelzbeginn −24°C, Schmelzpunkt +35°C, Schmelzenthalpie 50 J/g.

Beispiel 2

Wie Beispiel 1, jedoch mit 68 g Isopren statt 136 g. Isoliert wurde ein festes Produkt mit der Zusammensetzung (Mol%): Ethylen 49,6, 1,4-Butadien 43,3, 1,4-Isopren 6,3, 1,2-Butadien 0,7, 3,4-Isopren <0,1. Eine DSC-Messung ergab folgende Werte:

Schmelzbeginn −9°C, Schmelzpunkt +52°C, Schmelzenthalpie 63 J/g.

Beispiel 3

Wie Beispiel 1, jedoch mit 68 g Isopren, 110 g Butadien und 15 g Ethylen. Nach Aufarbeitung erhielt man 44 g eines thermoplastischen Polymeren. [η] (Toluol, 25°C): 2,54 dl/g. Zusammensetzung (Mol%): Ethylen: 51,3, 1,4-Butadien: 44,0 1,4-Isopren: 3,8, 1,2-Butadien: 0,8, 3,4-Isopren: <0,1. DSC-Messungen: Schmalzbeginn: +3°C, Schmelzpunkt: 63°C, Schmelzenthalpie 70 J/g.

Aus den Beispielen 1—3 geht hervor, daß der 1,4-Isopren-Gehalt im Produkt beeinflußt werden kann durch Variation des Monomerenverhältnisses Butadien/Isopren. Steigende Mengen Isopren im Produkt erniedrigen dessen Schmelzpunkt und bewirken einen kautschukartigen Charakter.

Beispiel 4

Wie Beispiel 1, jedoch wurden vorgelegt 500 ml n-Hexan, 170 g Isopren und 15 g Butadien. Nach Zugabe von 8 mMol i-Bu$_3$Al und 1 mMol Dineopentyloxivanadiumoxichlorid wurde während 60 Minuten ca. 20 g Ethylen bei −30°C eingeleitet, Aufarbeitung wie in Beispiel 1. Ausbeute 67 g; [η] (Toluol, 25°C): 1,84 dl/g. Zusammensetzung in Mol%: Ethylen 50,9, 1,4-Butadien 11,9, 1,4-Isopren 36,2, 1,2-Butadien 0,4, 3,4-Isopren 0,6.

**Beispiel 5**

In einem trockenen Kolben wurden unter Stickstoff vorgelegt: 1000 ml n-Hexan, 68 g Isopren, 55 g Butadien, 10 mMol i-Bu$_3$Al und 1 mMol Dineopentyloxivanadiumoxichlorid. Bei −30°C wurden innerhalb 60 Minuten etwa 20 g Ethylen eingeleitet. Weiteres Vorgehan analog Beispiel 1. Ausbeute 44 g; [η] (Toluol, 25°C): 2,35 dl/g. Zusammensetzung in Mol%; Ethylen 51,5, 1,4-Butadien 40,4, 1,4-Isopren 7,5, 1,2-Butdien 0,5, 3,4-Isopren <0,1.

**Beispiel 6**

Bei −20°C wurden in einem trockenen Kolben unter Stickstoff vorgelegt: 500 ml n-Hexan, 102 g Isopren, 10 mMol i-Bu$_3$Al und 1 mMol Dineopentyloxivanadiumoxichlorid. Innerhalb 60 Minuten wurden gleichzeitig und gleichmäßig 50 g Butadien und 20 g Ethylen eingeleitet. Aufarbeitung wie in Beispiel 1. Man erhielt 48 g eines Kautschuks mit einer Mooney-Viskosität ML 1+4/ 100°C: 54. [η] (Toluol, 25°C): 1,83 dl/g. Zusammensetzung (Mol%): Ethylen 50,7, 1,4-Butadien 29,9, 1,4-Isopren, 18,2 1,2-Butadien 0,7, 3,4-Isopren 0,5.

**Patentansprüche**

1. Ethylen-Butadien-Isopren-Terpolymere, die zu mehr als 80 Mol-% aus alternierenden Ethylen-Dien-Einheiten aufgebaut sind, zwischen 45—55 Mol-% Ethylen einheiten, 2—48 Mol-% Butadien und 48—2 Mol-% Isopren und mehr als 95 Mol-% der eingebauten Dien-Einheiten in der 1,4-Konfiguration enthalten.

2. Terpolymere gemäß Anspruch 1, enthaltend 48—52 Mol-% Ethylen und 48—52 Mol-% Dien.

3. Verfahren zur Herstellung von Terpolymeren gemäß Ansprüchen 1 und 2, dadurch gekennzeichnet, daß die Polymerisation in Lösung bei einer Temperatur zwischen −80°C und +100°C in Gegenwart eines Katalysatorsystems durchgeführt wird, das aus

a) einer Vanadiumverbindung der Formel VO(OR)$_2$X und

b) einer aluminiumorganischen Verbindung der Formeln AlR$_3$′, HAlR$_2$′ oder R$_2$′AlY besteht, in denen

R eine Alkylgruppe mit 1—20 C-Atomen,

X eine Halogengruppe,

R′ eine Alkylgruppe mit 1—8 C-Atomen und

Y eine Halogengruppe bedeuten, wobei das molare Verhältnis b/a 100:1 bis 1:10 beträgt.

4. Verfahren gemäß Anspruch 3, dadurch gekennzeichnet, daß ein Katalysatorsystem bestehend aus Di-neopentyloxivanadiumoxichlorid und/oder Di-(2-ethylhexyloxi)vanadiumoxichlorid und Triisobutylaluminium eingesetzt wird.

5. Verfahren gemäß Ansprüchen 3 und 4, dadurch gekennzeichnet, daß bei einer Temperatur von −60°C bis +60°C polymerisiert wird.

6. Verfahren gemäß Ansprüchen 3 bis 5, dadurch gekennzeichnet, daß das molare Verhältnis von b/a im Katalysatorsystem zwischen 10:1 und 1:1 liegt.

7. Verfahren gemäß Ansprüchen 3 bis 6, dadurch gekennzeichnet, daß das molare Verhältnis Diolefine:Ethylen bei der Polymerisation größer als 1:1 ist.

8. Verfahren gemäß Ansprüchen 3 bis 7, dadurch gekennzeichnet, daß die Diolefine und Ethylen im molaren Verhältnis von 1,1—100:1 polymerisiert werden.

9. Verfahren gemäß Ansprüchen 3 bis 8, dadurch gekennzeichnet, daß die Diolefine und der Katalysator vorgelegt werden und anschließend Ethylen eingeleitet wird.

10. Verfahren gemäß Ansprüchen 3 bis 8, dadurch gekennzeichnet, daß Isopren und der Katalysator vorgelegt werden und anschließend Butadien und Ethylen gleichzeitig eingeleitet werden.

**Revendications**

1. Copolymères ternaires éthylène-butadiène-isoprène constitués pour plus de 80 mol% de motifs alternants éthylène-diène, contenant de 45 à 55 mol% de motifs d'éthylène, de 2 à 48 mol% de butadiène et de 48 à 2 mol% d'isoprène, et plus de 95 mol% des motifs de diène incorporés en configuration 1,4.

2. Copolymères ternaires selon la revendication 1, contenant 48 à 52 mol% d'éthylène et 48 à 52 mol% de diène.

3. Procédé de préparation des copolymères ternaires selon les revendications 1 et 2, caractérisé en ce que l'on effectue la polymérisation en solution à une température de −80 à +100°C en présence d'un système catalyseur consistant en

a) un composé du vanadium de formule VO(OR)$_2$X et

b) un composé organique de l'aluminium de formule AlR′$_3$, HAlR′$_2$ ou R′$_2$AlY dans lesquelles

R représente un groupe alkyl en C$_1$—C$_{20}$,

X représente un groupe halogéné,

R′ représente un groupe alkyle en C$_1$—C$_8$ et

Y représente un groupe halogéné, le rapport molaire b/a allant de 100:1 à 1:10.

4. Procédé selon la revendication 3, caractérisé en ce que l'on utilise un système catalyseur consistant en oxychlorure de dinéopentyloxy-vanadium et/ou oxychlorure de di-(2-éthyl-hexyloxy)-vanadium et triisobutyl-aluminium.

5. Procédé selon les revendications 3 et 4, caractérisé en ce que l'on polymérise à une température de −60 à +60°C.

6. Procédé selon les revendications 3 à 5, caractérisé en ce que le rapport molaire b/a dans le système catalyseur va de 10:1 à 1:1.

7. Procédé selon les revendications 3 à 6, caractérisé en ce que le rapport molaire dioléfines/éthylène à la polymérisation est supérieur à 1:1.

8. Procédé selon les revendications 3 à 7, caractérisé en ce que l'on polymérise les dioléfines et l'éthylène à un rapport molaire de 1,1 à 100:1.

9. Procédé selon les revendications 3 à 8, caractérisé en ce que l'on mélange les dioléfines et le catalyseur et on injecte ensuite l'éthylène.

10. Procédé selon les revendications 3 à 8, caractérisé en ce que l'on mélange l'isoprène et le catalyseur et on injecte ensuite simultanément la butadiène et l'éthylène.

**Claims**

1. Ethylene-butadiene-isoprene terpolymers which are composed to an extent of more than 80 mol% of alternating ethylene-diene units and contain between 45—55 mol% of ethylene units, 2—48 mol% of butadiene and 48—2 mol% of isoprene and more than 95 mol% of the incorporated diene units in the 1,4-configuration.

2. Terpolymers according to Claim 1, containing 48—52 mol% of ethylene and 48—52 mol% of diene.

3. Process for the preparation of terpolymers according to Claims 1 and 2, characterised in that the polymerisation is carried out in solution at a temperature of between −80°C and +100°C in the presence of a catalyst system which consists of

a) a vanadium compound of the formula $VO(OR)_2X$ and

b) an organic aluminium compound of the formulae $AlR_3'$, $HAlR_2'$ or $R_2'AlY$, in which

R denotes an alkyl group with 1—20 C atoms,

X denotes a halogen group,

R' denotes an alkyl group with 1—8 C atoms and

Y denotes a halogen group, the molar ratio b/a being 100:1 to 1:10.

4. Process according to Claim 3, characterised in that a catalyst system consisting of di-neopentyloxyvanadium oxychloride and/or di-(2-ethylhexyloxy)vanadium oxychloride and triisobutylaluminium is used.

5. Process according to Claims 3 and 4, characterised in that polymerisation is carried out at a temperature of −60°C to +60°C.

6. Process according to Claims 3 to 5, characterised in that the molar ratio of b/a in the catalyst system is betwen 10:1 and 1:1.

7. Process according to Claims 3 to 6, characterised in that the molar ratio of diolefins:ethylene during polymerisation is greater than 1:1.

8. Process according to Claims 3 to 7, characterised in that the diolefins and ethylene are polymerised in a molar ratio of 1.1—100:1.

9. Process according to Claims 3 to 8, characterised in that the diolefins and the catalyst are introduced first and then ethylene is passed in.

10. Process according to Claims 3 to 8, characterised in that isoprene and the catalyst are introduced first and then butadiene and ethylene are passed in simultaneously.